# FASCICULE DE BREVET EUROPEEN

(11) **EP 3 329 696 B1**
(45) Date de publication et mention de la délivrance du brevet: **26.01.2022**
(21) Numéro de dépôt: 16750935.5
(22) Date de dépôt: 07.07.2016
(51) Int. Cl.: H04W 4/12, H04W 4/029, H04W 4/18

(54) **DISPOSITIF DE DÉTERMINATION DE TRAJECTOIRE**
VORRICHTUNG ZUR BESTIMMUNG DER TRAJEKTORIE
DEVICE FOR DETERMINING A TRAJECTORY

(30) Priorité: 31.07.2015 FR 1557395
(43) Date de publication de la demande: 06.06.2018
(73) Titulaire: Intersec, 92085 Paris La Defense Cedex (FR)
(72) Inventeur: COIC, Jean-Marc, 92340 Bourg-la-Reine (FR); NUNEZ DEL PRADO CORTEZ, Miguel, 75014 Paris (FR); THOUEMENT, Sébastien, 92800 Puteaux (FR)
(74) Mandataire: Cabinet Netter
(86) Numéro de dépôt international: PCT/FR2016/051734
(87) Numéro de publication internationale: WO 2017/021600

(56) Documents cités:
- US-A1- 2014 114 561
- US-A1- 2014 315 583
- US-A1- 2015 079 932
- LORENA CALAVIA ET AL: "A Semantic Autonomous Video Surveillance System for Dense Camera Networks in Smart Cities", SENSORS, vol. 12, no. 12, 2 décembre 2012 (2012-12-02), pages 10407-10429, XP055096503, ISSN: 1424-8220, DOI: 10.3390/s120810407

## Description

L'invention concerne le domaine de la détection de trajectoire, plus particulièrement de manière passive, à partir de données de signalisation associées à un dispositif mobile.

Il est complexe de déterminer les flux de personnes qui se déplacent entre divers endroits. Pour un endroit donné, il est possible de déterminer des flux de manière statistique, en mesurant humainement le nombre de personnes qui rentrent et sortent. Cependant, ces méthodes sont peu fiables, présentent un coût important, et sont pauvres en informations contextuelles. En effet, il n'est pas possible de savoir quelle est la répartition horaire de ces flux, quels sont les moyens de transport utilisés, etc. Le document US 2015/079932 A1 décrit d'obscurcir des historiques de rapport de localistion pour protéger la vie privée.

L'invention vient améliorer la situation. À cet effet, l'invention propose un dispositif de détermination de trajectoire selon la revendication indépendante 1.

Ce dispositif est très avantageux car il permet de déterminer des trajectoires de manière passive, à partir des données de signalisation des dispositifs de communication. Cette détermination est fiable, automatisable et peu couteuse en moyens humains. De plus, elle permet un traitement statistique permettant de qualifier de nombreuses informations contextuelles.

Dans certaines variantes, le dispositif pourra présenter une ou plusieurs des caractéristiques suivantes :
- le classificateur et l'analyseur sont appelés séquentiellement pour produire des données de trajectoire,
- l'analyseur applique la règle a) avant d'appliquer la règle b),
- l'analyseur applique la règle b) avant d'appliquer la règle c) et
- l'analyseur applique la règle c) avant d'appliquer la règle d).

L'invention concerne également un procédé de détermination de trajectoire selon la revendication indépendante 6.

Dans certaines variantes, le procédé pourra présenter une ou plusieurs des caractéristiques suivantes :
- l'opération c) applique la règle c1) avant la règle c2),
- l'opération c) applique la règle c2) avant d'appliquer la règle c3), et
- l'opération c) applique la règle c3) avant d'appliquer la règle c4).

L'invention concerne également un produit de programme d'ordinateur comprenant des portions de code de programme pour mettre en œuvre le procédé selon l'invention.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique d'un dispositif selon l'invention,
- la figure 2 représente un exemple de mise en œuvre d'une fonction par le classificateur de la figure 1,
- les figures 3 à 7 représentent des exemples de mise en œuvre de fonctions par l'analyseur de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

En outre, la description détaillée est augmentée de l'annexe A, qui donne la formulation de certaines formules mathématiques mises en œuvre dans le cadre de l'invention. Cette Annexe est mise à part dans un but de clarification, et pour faciliter les renvois. Elle est partie intégrante de la description, et pourra donc non seulement servir à mieux faire comprendre la présente invention, mais aussi contribuer à sa définition, le cas échéant.

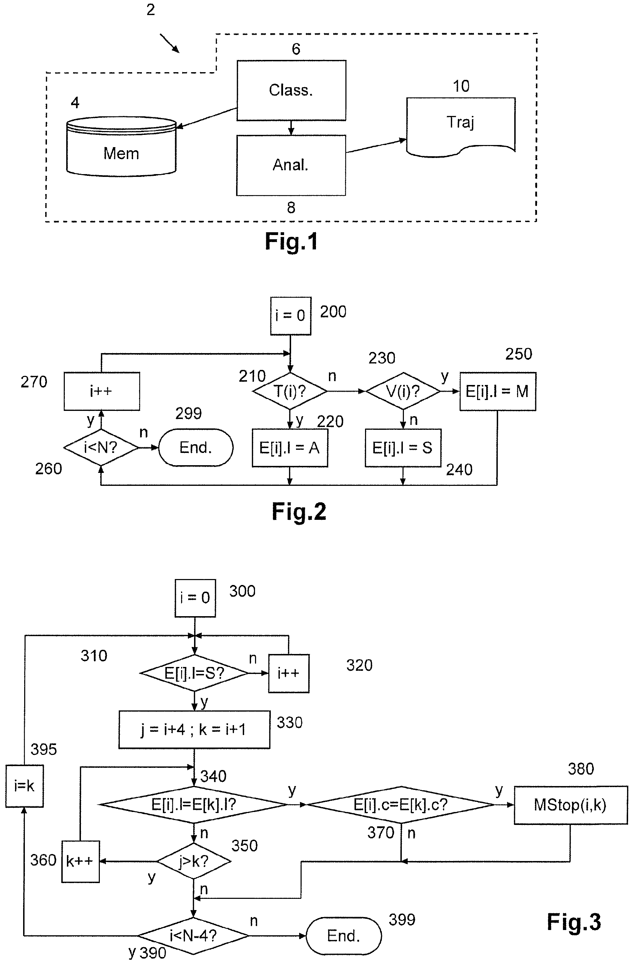

La figure1 représente une vue schématique d'un dispositif de détermination de trajectoire selon l'invention.

Le dispositif 2 comprend une mémoire 4, un classificateur 6 et un analyseur 8, qui produisent ensemble des données de trajectoire 10.

Dans l'exemple décrit ici, le classificateur 6 et l'analyseur 8 sont des éléments accédant directement ou indirectement à la mémoire 4. Ils peuvent être réalisés sous la forme d'un code informatique approprié exécuté sur un ou plusieurs processeurs. Par processeurs, il doit être compris tout processeur adapté aux calculs décrits ci-après. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

Dans l'exemple décrit ici, la mémoire 4 reçoit des données d'un opérateur de téléphonie mobile (que ce soit en GSM, GPRS, EDGE, UMTS, LTE, ou leur évolution, ou encore un réseau WiFi étendu de type « hotspots »). La mémoire 4 contient l'ensemble des données de signalisation et d'activité d'une, plusieurs ou toutes les zones géographiques desservies par l'opérateur. La mémoire 4 peut être directement accessible ou déportée, répartie sur un ou plusieurs sites, correspondre à l'agrégation de plusieurs stockages distincts, y compris appartenant à plusieurs opérateurs mettant leurs ressources en commun. La mémoire 4 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 4, ou sur celle-ci. Ces données peuvent être effacées après que le dispositif ait effectué ses tâches ou conservées.

Les données de signalisation associent un identifiant de dispositif mobile de communication, un identifiant de signalisation et un marqueur temporel. Le marqueur temporel peut être un marqueur brut ou être accompagné d'une durée. Les dispositifs mobiles de communication peuvent être tout dispositif se connectant à un réseau de téléphonie mobile GSM, GPRS, EDGE, UMTS, LTE ou leur évolution, ou à un réseau WiFi étendu de type « hotspots ». Les identifiants de signalisation peuvent être tirés de toute signalisation sur ces réseaux, ou d'une triangulation à partir de ces identifiants, et/ou à des données de type GPS communiquées par le dispositif.

Le dispositif 2 va dans un premier temps analyser les données de signalisation associées à chaque identifiant de dispositif mobile afin d'adjoindre un marqueur de déplacement à la cellule de localisation correspondant aux identifiants de signalisation et aux marqueurs temporels associés. Ce triplet constitue ce qui sera par la suite appelé un événement.

La figure 2 représente un exemple d'une fonction mise en œuvre par le classificateur 6 pour réaliser cela.

Dans une opération 200, le classificateur 6 initialise un indice de boucle i à 0. Ensuite, dans une opération 210, une fonction T() est exécutée pour analyser le marqueur de temps associé à l'identifiant de signalisation d'indice i. La fonction T() détermine le temps qui s'est écoulée entre le marqueur de temps associé à l'identifiant de signalisation d'indice i et le marqueur précédent. Si la durée est supérieure à un seuil choisi (par exemple supérieure à 4 heures, ou 6 heures, ou plus), alors dans une opération 220, un marqueur de déplacement de type arrêt long est associé à la cellule de localisation et au marqueur de temps associés à l'identifiant de signalisation d'indice i.

Les marqueurs de temps de type arrêt long sont importants car ils servent à « découper » les suites d'événements. Ainsi, tous les traitements décrits ci-après concernent des séquences d'événements situés entre deux événements indiquant un arrêt long. À tout le moins, dès qu'un arrêt long est détecté, deux séquences sont générées qui seront traitées de manière indépendante.

Sinon, dans une opération 230, une fonction V() est exécutée pour déterminer la différence d'emplacement entre la cellule de localisation associée à l'identifiant de signalisation d'indice i et celle associée à l'identifiant de signalisation d'indice i précédent. Si la fonction V() indique que la vitesse de déplacement entre ces cellules de localisation est inférieure à une vitesse seuil (égale à environ 10 km/h par exemple), alors dans une opération 240, un marqueur de déplacement de type arrêt court est associé à la cellule de localisation et au marqueur de temps associés à l'identifiant de signalisation d'indice i. Sinon, dans une opération 250, un marqueur de déplacement de type mouvement est associé à la cellule de localisation et au marqueur de temps associés à l'identifiant de signalisation d'indice i. Ainsi, les évènements désignent des paires d'identifiants de signalisation associés à un même dispositif de communication mobile et consécutifs temporellement, et un évènement n'est de type mouvement que si la vitesse de déplacement perçue est plus rapide qu'une vitesse de marche. En variante, la fonction V() pourrait déterminer si la cellule de localisation n'a pas changé entre les deux identifiants de signalisation successifs au lieu de se baser sur la vitesse de déplacement.

Après l'association d'un marqueur par l'une des opérations 220, 240 ou 250, une opération 260 teste si tous les identifiants de signalisation ont été parcourus. Lorsque cela n'est pas le cas, l'indice i est incrémenté dans une opération 270. Sinon, la fonction se termine dans une opération 299.

Une fois que toutes les données ont été marquées, le dispositif 2 peut procéder à leur traitement. En effet, de nombreuses données de signalisation peuvent ne pas représenter un déplacement d'une personne. Par exemple, un dispositif de communication peut être entouré de plusieurs antennes, et pour diverses raisons être attaché successivement à diverses de ces antennes, sans pour autant se déplacer. Dans ce cas, les données de signalisation indiqueront des cellules de localisation distinctes, ce qui suggère un déplacement, alors que le dispositif de communication (et donc son utilisateur) ne s'est pas déplacé. De nombreux autres cas de figures qui ajoutent du bruit peuvent exister et doivent être traités pour obtenir des données de trajet fiables.

Les exemples de fonctions représentées sur les figures 3 à 7 montrent comment l'analyseur 8 traite les données marquées pour en tirer des données de trajet.

La figure 3 représente un exemple de mise en œuvre d'une première fonction. Cette fonction traite du cas décrit plus haut. Ainsi, lorsqu'entre deux données de localisation dont le marqueur de déplacement indique un arrêt court dans une même cellule de localisation et qui sont séparés par moins de quatre évènements, tous les marqueurs de déplacement sont convertis en arrêt court.

Ainsi, dans une opération 300, un indice de boucle i est initialisé à 0. Ensuite dans une opération 310, un test est réalisé pour déterminé si l'événement d'indice i a un marqueur de déplacement E[i].l qui indique un arrêt court ou pas. Tant que ce n'est pas le cas, l'indice i est incrémenté dans une opération 320 et le test de l'opération 310 est répété.

Dès qu'un arrêt court est détecté, un indice j est défini avec la valeur i ajoutée de 4, et un indice de boucle k est défini avec la valeur i ajoutée de 1 dans une opération 330. Ensuite, une boucle détermine s'il existe un évènement entre i et j qui est également un arrêt court. Pour cela, un test est fait dans une opération 340. Tant que ce test n'est pas positif, un test dans une opération 350 vérifie que k est inférieur à j, et k est incrémenté dans une opération 360.

Lorsqu'un arrêt court est trouvé, un test dans une opération 370 vérifie si les deux évènements E[i] et E[k] partagent la même cellule de localisation. Si c'est le cas, alors on a bien deux évènements avec un marqueur de déplacement de type arrêt court, et qui sont séparés par moins de quatre évènements. Alors, une fonction MStop() recevant i et k comme arguments transforme tous les marqueurs de déplacement E[n].l en arrêt court, avec n compris entre i et k.

Ensuite, ou lorsque l'opération 350 détermine qu'il n'y a pas d'événement de type arrêt court à moins de 4 évènements de l'événement i, ou lorsque les cellules de localisation de l'événement i et celle de l'événement k sont distinctes, un test dans une opération 390 vérifie s'il reste encore 4 opérations pour relancer une boucle. Si oui, alors dans une opération 395, l'indice i est mis à jour avec l'indice k et la boucle reprend avec l'opération 310. Sinon, la fonction se termine dans une opération 399.

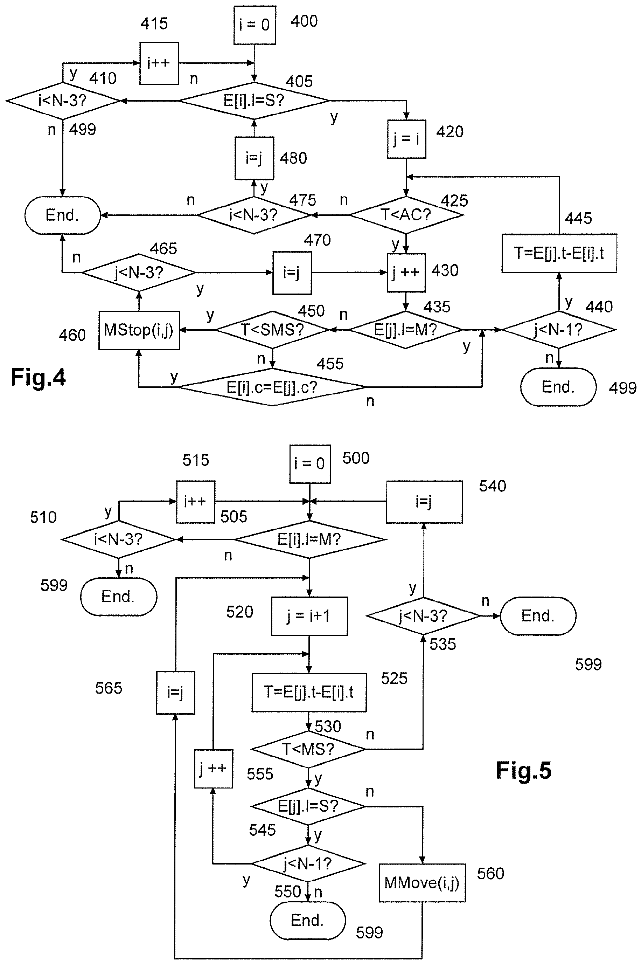

La figure 4 représente un autre exemple d'une fonction mise en œuvre par l'analyseur 8. En effet, lorsque deux évènements dont les marqueurs de déplacement indiquent un arrêt court sont séparés par une durée, et que ces évènements sont séparés par une durée inférieure à un premier seuil permettant de passer d'une cellule à une autre, ou que les deux évènements sont associés à la même cellule de localisation mais que leurs marqueurs de temps sont séparés par une durée supérieure à un deuxième seuil indiquant que l'aller-retour vers une cellule voisine n'était pas possible, alors tous les évènements entre ceux-ci sont modifiés de sorte que leur marqueur de déplacement indique un arrêt court.

Ainsi, dans une opération 400, un indice i de boucle est initialisé à 0. Ensuite, dans une opération 405, un test est réalisé pour déterminé si l'événement d'indice i courant est associé à un arrêt court ou pas. Tant que ce test est négatif, dans une opération 410 teste s'il reste au moins trois évènements (puisque la fonction cherche au minimum un évènement entre deux évènements de type arrêt court), et, si c'est le cas, l'indice i est incrémenté dans une opération 415 et le test de l'opération 405 est répété. Si ce n'est pas le cas, la fonction se termine dans une opération 499.

Lorsqu'un évènement dont le marqueur de déplacement indique un arrêt court est trouvé, une boucle à deux tests est lancée afin d'essayer de vérifier si l'une des deux conditions ci-dessus est remplie. Pour cela, dans une opération 420, un indice j égal à i est défini.

Ensuite, une boucle commence dans laquelle deux conditions sont recherchées. Si l'une de ces deux conditions est remplie, alors les évènements situés entre les deux évènements les plus extrêmes temporellement sont modifiés pour les marquer comme correspondant à un arrêt court.

Ainsi, dans une opération 425, la condition d'arrêt la moins contraignante est testée, en comparant une durée T qui indique la différence entre le marqueur temporel de l'événement d'indice j courant et celui de l'événement d'indice i. Si la durée T est inférieure à ce premier seuil AC, alors l'indice j est incrémenté dans une opération 430.

Puis, dans une opération 435, un test détermine si l'événement d'indice j indique un mouvement ou un arrêt court. S'il s'agit d'un mouvement, alors dans une opération 440, un test détermine si l'événement d'indice j est le dernier ou pas. Si c'est le cas, alors la fonction se termine avec l'opération 499. Sinon, une durée T correspondant à la différence entre le marqueur de temps de l'évènement d'indice i et l'événement d'indice j est calculée dans une opération 445, puis la boucle reprend avec l'opération 425, jusqu'à ce qu'un évènement indiquant un arrêt court soit rencontré dans l'opération 435.

Lorsqu'un deuxième évènement indiquant un arrêt court est trouvé dans l'opération 435, un test dans une opération 450 détermine si la durée T est inférieure à un deuxième seuil SMS. Si c'est le cas, alors la deuxième condition (la plus contraignante) est remplie, et dans une opération 460, la fonction MStop() est appelée avec les indices i et j pour modifier les marqueurs de déplacement des évènements entre ces indices en arrêt court. Ensuite, un test est réalisé dans une opération 465 pour déterminer s'il reste encore 3 évènement dans la liste E[], comme pour l'opération 410..

Si ce n'est pas le cas, alors un test est réalisé dans une opération 455 pour déterminer si les évènements d'indices i et j concernent la même cellule de localisation. Si c'est le cas, alors la première condition est remplie, et dans une opération 460, la fonction MStop() est appelée avec les indices i et j pour modifier les marqueurs de déplacement des évènements entre ces indices en arrêt court, puis le test de l'opération 465 est réalisé.

Si le test de l'opération 455 est négatif, alors la boucle se poursuit avec l'opération 440 jusqu'à ce que la première condition soit remplie ou que la durée T excède le premier seuil AC, ou que l'opération 440 indique la fin de la boucle.

Enfin, lorsque le test de l'opération 465 est positif, alors l'indice i est mis à jour avec la valeur de l'indice j (puisque l'événement d'indice j indique un arrêt court) dans une opération 470, et la boucle reprend avec l'opération 430.

Le premier seuil AC et le deuxième seuil SMS sont prévus de sorte que AC est supérieur à SMS. Le premier seuil AC permet de détecter les cas indiquant un changement de cellule puis un retour à la cellule originale, alors que le temps nécessaire pour cela (le temps correspondant au premier seuil AC), n'était pas suffisant. De manière similaire, le deuxième seuil SMS désigne un temps estimé nécessaire pour passer d'une cellule à une autre cellule voisine.

Dans l'exemple décrit ici, le premier seuil AC est d'environ 10 minutes, tandis que le deuxième seuil SMS est d'environ 6 minutes. Ainsi, la fonction va transformer en arrêt courts les évènements associés à un mouvement compris entre deux évènements associés à un arrêt court et séparés de moins de 6 (deuxième seuil SMS) ou 10 minutes (premier seuil AC).

La figure 5 représente un autre exemple d'une fonction mise en œuvre par l'analyseur 8. En effet, lorsque deux évènements indiquent un mouvement, et que ces évènements sont séparés par une durée inférieure à un troisième seuil indiquant qu'un arrêt court n'est pas possible, alors les évènements intermédiaires sont modifiés de sorte que leurs marqueurs de déplacement indiquent un mouvement.

Ainsi, dans une opération 500, un indice i de boucle est initialisé à 0. Ensuite dans des opérations 505, 510 et 515 similaires aux opérations 405, 410 et 415, l'événement d'indice i est testé et incrémenté jusqu'à trouver un évènement indiquant un mouvement. La seule différence est que l'opération 405 teste si l'événement est de type arrêt court alors que l'opération 505 teste si l'événement est de type mouvement.

Ensuite, une boucle est lancée afin de chercher l'événement d'indice j dont le marqueur de déplacement indique un mouvement et dont le marqueur de temps indique une durée inférieure au troisième seuil MS lorsque comparé au marqueur de temps de l'événement d'indice i.

Ainsi, dans une opération 520, un indice j est défini comme égal à i plus 1, puis dans une opération 525 une durée T entre le marqueur de temps de l'événement d'indice j et le marqueur de temps de l'évènement d'indice i est calculée.

Ensuite, dans une opération 530, la durée T est comparée au troisième seuil afin de déterminer si celui-ci est dépassé ou pas. Si c'est le cas, alors un test similaire à celui de l'opération 510 est réalisé dans une opération 535. Si c'est le cas, alors l'indice i est mis à jour avec l'indice j dans une opération 540, et le prochain évènement indiquant un mouvement est recherché avec l'opération 505. Si ce n'est pas le cas, alors la fonction se termine dans une opération 599.

Si la durée T est inférieure au troisième seuil, alors dans une opération 545, un test détermine si l'événement d'indice j indique un arrêt court. Si c'est le cas, alors dans une opération 550, un test détermine s'il s'agit de la dernière opération de la liste E. Si c'est le cas, alors la fonction se termine avec l'opération 599. Sinon, alors l'indice j est incrémenté dans une opération 555 et la boucle reprend avec l'opération 525 jusqu'à trouver un deuxième évènement indiquant un mouvement, ou jusqu'à ce que le troisième seuil MS soit dépassé.

Lorsqu'un deuxième évènement indiquant un mouvement est trouvé dans l'opération 545, une fonction MMove() est exécutée dans une opération 560. La fonction MMove() reçoit comme arguments les indices i et j, pour modifier les marqueurs de déplacement des évènements entre ces indices en mouvement. Enfin, dans une opération 565, l'indice i est mis à jour avec j (puisque l'évènement d'indice j indique un mouvement), et la boucle reprend avec l'opération 520.

Dans l'exemple décrit ici, le troisième seuil MS est d'environ 15 minutes. Ainsi, tous les évènements associés à un arrêt court entre deux évènements associés à un mouvement et séparés de moins de 15 minutes. En variante, le seuil MS pourrait être plus important, et par exemple être d'une heure. Dit autrement, cette fonction revient à considérer qu'un arrêt court entre deux mouvements n'est pas une anomalie si elle dure plus longtemps que le troisième seuil MS.

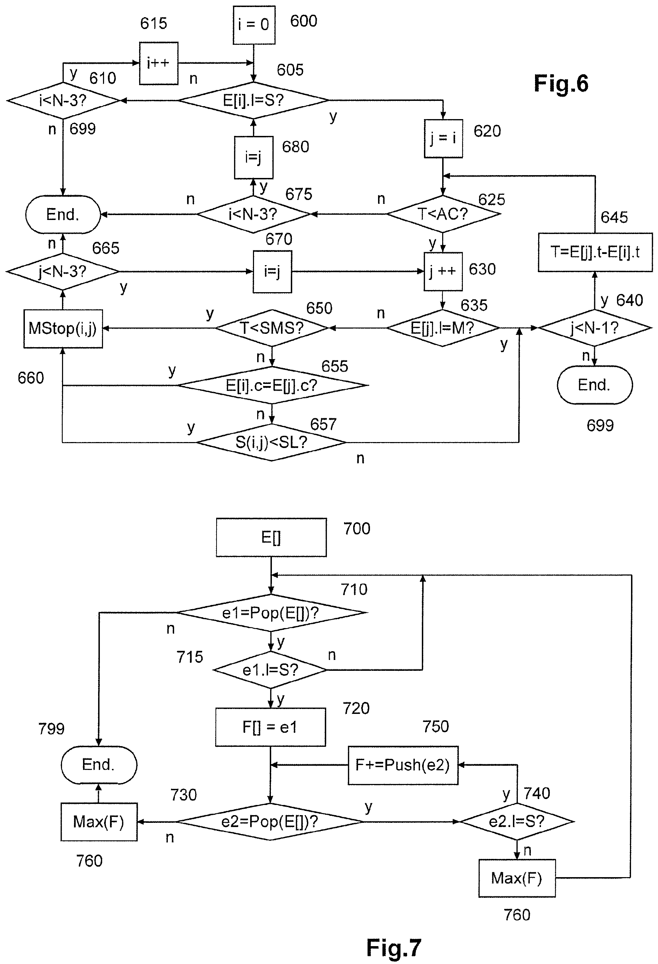

La figure 6 représente un autre exemple d'une fonction mise en œuvre par l'analyseur 8. Cette fonction peut être vue comme une variante de la fonction représentée sur la figure 4, ou comme un complément à celle-ci, qui peut par exemple être exécutée après la fonction de la figure 5.

Dans cette fonction la structure est similaire, mais les conditions recherchées diffèrent :
- la première condition, la moins contraignante, diffère en ce que les cellules de localisation associées aux deux évènements ne sont pas identiques, le premier seuil étant lui aussi identique, et la vitesse de déplacement entre les deux arrêts courts extrême devant être inférieure à une vitesse seuil SL,
- la deuxième condition est similaire à la deuxième condition de la fonction de la figure 4, le deuxième seuil étant identique, mais les cellules de localisation doivent ici être identiques.

La fonction de la figure 6 étant très proche de celle de la figure 4, les références numériques ont été maintenues identiques, en adaptant la centaine. En fait, seules les opérations 650 et 655 diffèrent des opérations 450 et 455, une opération 657 étant ajoutée.

L'opération 650 teste la seconde condition, et la combinaison des opérations 655 et 657 teste la première condition. Dans la pratique, la première condition ne devrait pas être remplie, dans la mesure où elle correspond à la même première condition que pour la fonction de la figure 4. Mais elle permet de s'assurer que la fonction de la figure 5 ou toute autre fonction exécutée précédemment n'a pas introduit de cas non souhaité.

L'opération 657 teste si la vitesse « à vol d'oiseau » entre les cellules de localisation associées aux évènements d'indice i et j est inférieure à une vitesse seuil SL d'environ 10 km/h. Elle est calculée en divisant la distance entre les centres des cellules de localisation respectives par la durée entre les deux évènements. Ainsi, dans le cas où un évènement de type bruit (par exemple si le dispositif de communication mobile s'attache à une station éloignée par accident) pourrait faire croire à un déplacement entre les évènements i et j, ce test permet de le corriger. L'opération 655 n'est également pas supposée se produire dans la pratique, mais, si cela devait être le cas, elle permet de ne pas avoir à calculer la vitesse dans l'opération 657 ce qui représente un gain de temps précieux.

Une fois que l'analyseur 8 a exécuté les fonctions des figures 3 à 6, il va simplifier les données résultantes pour produire les données de trajet. Pour cela, l'analyseur 8 va fusionner toutes les données de signalisations successives indiquant un arrêt court, et les associer, pour une durée totale correspondant à la différence entre les marqueurs de temps des évènements extrêmes, à la cellule de localisation la plus représentée.

La figure 7 représente un exemple de réalisation de cette fonction. Ainsi, dans une opération 700, la liste d'événements E[] modifiée tel que précédemment est utilisée comme point de départ.

Ensuite, une boucle va dépiler cette liste et agréger les évènements indiquant un arrêt court lorsque nécessaire. Pour cela, dans une opération 710, la liste E[] est dépilée dans un évènement e1. Lorsque la liste est vide, la fonction se termine dans une opération 799. Dans une opération 715, un test détermine si l'évènement e1 indique un arrêt court. Lorsque ce n'est pas le cas, l'opération 710 est répétée.

Ensuite, dans une opération 720, une liste F[] est initialisée avec e1. La liste F[] va recevoir tous les évènements successifs indiquant un arrêt court. Dans une opération 730, la liste E[] est à nouveau dépilée, cette fois dans un évènement e2. S'il y a pas un évènement e2, alors dans une opération 740, un test détermine si l'évènement e2 concerne un arrêt court. Si c'est le cas, alors l'évènement e2 est introduit dans la liste F[] dans une opération 750, et l'opération 720 est répétée. Lorsque le prochain évènement e2 qui indique un mouvement est trouvé dans l'opération 740, ou lorsque l'opération 730 indique que la liste E[] se termine par une suite d'arrêts courts, une fonction Max() recevant la liste F[] comme argument est exécutée dans une opération 760. La fonction Max() a pour fonction la fusion des évènements de la liste F[], en choisissant la cellule de localisation la plus représentée en terme de durée dans la liste F[], et en résumant tous les évènements de cette liste en un seul évènement dont la durée correspond à la différence entre les marqueurs de temps les plus extrêmes de la liste F[], associée à la cellule de localisation choisie.

Ainsi, les données de trajet produites en sortie de l'analyseur 8 contiennent des suites d'événements indiquant un mouvement et/ou un unique évènement indiquant un arrêt court.

Dans l'exemple décrit ici, l'analyseur exécute les fonctions des figures 3 à 7 séquentiellement, et de manière successive. Ainsi, l'analyseur exécute d'abord la fonction de la figure 3 sur l'ensemble des données, puis la fonction de la figure 4 sur les données résultantes, etc. Ces fonctions successives permettent de réduire le bruit naturel des données de signalisation et de réduire leur nombre, en produisant des données de trajectoire qui acquièrent un « sens » lié à la notion de déplacement autre qu'à pied.

Les suites d'événements qui en résultent sont particulièrement avantageuses car elles présentent une certaine régularité qui permet de rassembler les trajets entre eux pour établir des statistiques et/ou rattacher une suite d'évènement à un parcours connu. De plus, elles permettent de réduire grandement le bruit qui est inhérent aux données de signalisation utilisées en entrée, ainsi que de réduire la quantité de calculs pour les comparer entre elles, en permettant de définir des épisodes signifiants.

Ainsi, les données de trajectoire qui sont produites représentent des segments qui représentent un déplacement tangible, même s'il ne correspond pas parfaitement aux données de signalisation originelles. Elles constituent une abstraction des données de signalisation qui permet, par leur nature qui désigne un mouvement ou un arrêt court de segmenter les données de signalisation originales en épisodes significatifs.

De plus, la notion d'arrêt court permet de déterminer concrètement une présence dans un lieu donné pour une plage de temps donnée, ce qui est presque impossible à partir des données de signalisation seules. Il devient en outre possible de comparer des trajectoires avec des trajectoires de référence.

Enfin, les données de trajectoire constituent une forme de compression des données de signalisation : cela rend possible des calculs sur de grands volumes de données de localisation. Par exemple, la Demanderesse a pu réduire un volume de données associées à un aéroport d'environ 4To à seulement 100Go. Cette réduction a permis de rendre le traitement des données de trajectoires possible, alors qu'il ne l'était pas avec la masse de données originelle, sauf à ajouter une quantité de serveurs importante.

## Revendications

1. Dispositif de détermination de trajectoire, comprenant :
- une mémoire (4) pour recevoir des données de signalisation associant des identifiants de dispositif mobile de communication, des marqueurs temporels et des identifiants de signalisation, certains au moins des identifiants de signalisation désignant une cellule de localisation,
- un classificateur (6) capable, pour un identifiant de dispositif mobile de communication donné, de marquer les données de signalisation qui lui sont associées avec un marqueur de déplacement indiquant un état choisi parmi une liste comprenant au moins un mouvement et un arrêt court,
- un analyseur (8) capable de traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent indiquent deux mouvements ou indiquent au plus un unique arrêt court, en appliquant l'une au moins des règles suivantes :
a) la modification de marqueurs de déplacement quelconques en marqueurs de déplacement indiquant un arrêt court, lorsque, pour deux marqueurs de déplacement indiquant un arrêt court associé à une unique cellule de localisation, le nombre de marqueurs de déplacements dont les marqueurs de temps indiquent qu'ils sont entre ces deux marqueurs de déplacement est inférieur ou égal à 4,
b) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
c) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
d) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil,
l'analyseur (8) étant en outre agencé pour appliquer, après l'application d'au moins l'une des règles a), b), c) et d), la règle suivante :
e) la fusion de marqueurs de déplacement indiquant un arrêt court dont les marqueurs de temps indiquent qu'ils sont consécutifs, et l'association au marqueur de déplacement résultant de la cellule de localisation associée aux marqueurs de déplacement dont les marqueurs de temps représentent la durée la plus importante et d'un marqueur de temps correspondant à la somme des durées des marqueurs de temps associés.

2. Dispositif selon la revendication 1, dans lequel l'analyseur est en outre agencé pour appeler le classificateur (6) et l'analyseur (8) séquentiellement pour produire des données de trajectoire

3. Dispositif selon l'une des revendications précédentes, dans lequel l'analyseur (8) est en outre agencé pour appliquer la règle a) avant d'appliquer la règle b).

4. Dispositif selon l'une des revendications précédentes, dans lequel l'analyseur (8) est en outre agencé pour appliquer la règle b) avant d'appliquer la règle c).

5. Dispositif selon l'une des revendications précédentes, dans lequel l'analyseur (8) est en outre agencé pour appliquer la règle c) avant d'appliquer la règle d).

6. Procédé de détermination de trajectoire comprenant les opérations suivantes :
a) recevoir des données de signalisation associant des identifiants de dispositif mobile de communication, des marqueurs temporels et des identifiants de signalisation, certains au moins des identifiants de signalisation désignant une cellule de localisation,
b) pour un identifiant de dispositif mobile de communication donné, de marquer les données de signalisation qui lui sont associées avec un marqueur de déplacement indiquant un état choisi parmi une liste comprenant au moins un mouvement et un arrêt court,
c) traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent indiquent deux mouvements ou indiquent au plus un unique arrêt court, en appliquant l'une au moins des règles suivantes :
c1) la modification de marqueurs de déplacement quelconques en marqueurs de déplacement indiquant un arrêt court, lorsque, pour deux marqueurs de déplacement indiquant un arrêt court associé à une unique cellule de localisation,
le nombre de marqueurs de déplacements dont les marqueurs de temps indiquent qu'ils sont entre ces deux marqueurs de déplacement est inférieur ou égal à 4,
c2) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
c3) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
c4) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil, et,
après l'application d'au moins une des règles c1) à c4), en appliquant la règle suivante :
c5) la fusion de marqueurs de déplacement indiquant un arrêt court dont les marqueurs de temps indiquent qu'ils sont consécutifs, et l'association au marqueur de déplacement résultant de la cellule de localisation associée aux marque de déplacement dont les marqueurs de temps représentent la durée la plus importante et d'un marqueur de temps correspondant à la somme des durées des marqueurs de temps associés.

7. Procédé selon la revendication 6, dans lequel l'opération c) applique la règle c1) avant la règle c2).

8. Procédé selon la revendication 6 ou 7, dans lequel l'opération c) applique la règle c2) avant d'appliquer la règle c3).

9. Procédé selon l'une des revendications 6 à 8, dans lequel l'opération c) applique la règle c3) avant d'appliquer la règle c4).

10. Produit de programme d'ordinateur comprenant des portions de code de programme pour mettre en œuvre le procédé selon l'une des revendications 6 à 9 lorsque ledit programme est exécuté sur un ordinateur.

## Patentansprüche

1. Vorrichtung zur Trajektorienbestimmung, umfassend:
- einen Speicher (4), um Signalisierungsdaten zu empfangen, die Kennungen von mobilen Kommunikationsvorrichtungen, Zeitmarker und Signalisierungskennungen miteinander verknüpfen, wobei mindestens einige der Signalisierungskennungen eine Lokalisierungszelle bezeichnen,
- einen Klassifizierer (6), der in der Lage ist, bei einer gegebenen Kennung einer mobilen Kommunikationsvorrichtung die mit dieser verknüpften Signalisierungsdaten mit einem Bewegungsmarker zu markieren, der einen Zustand anzeigt, ausgewählt aus einer Liste, die mindestens eine Bewegung und einen kurzen Stopp umfasst,
- einen Analysierer (8), der in der Lage ist, die markierten Signalisierungsdaten in Abhängigkeit von den Bewegungsmarkern zu verarbeiten, um Trajektoriendaten zu erzeugen, die einerseits eine gegebene Kennung einer mobilen Kommunikationsvorrichtung, und andererseits eine Folge von Bewegungsmarkern, die jeweils mit einer Lokalisierungszelle und mit einem Zeitmarker verknüpft sind, miteinander verknüpfen, sodass zwei Bewegungsmarker, deren Zeitmarker anzeigen, dass sie einander folgen, zwei Bewegungen anzeigen, oder höchstens einen einzigen kurzen Stopp anzeigen, indem er mindestens eine der folgenden Regeln anwendet:
a) das Modifizieren von beliebigen Bewegungsmarkern zu Bewegungsmarkern, die einen kurzen Stopp anzeigen, wenn bei zwei Bewegungsmarkern, die einen kurzen Stopp anzeigen, der mit einer einzigen Lokalisierungszelle verknüpft ist, die Anzahl von Bewegungsmarkern, deren Zeitmarker anzeigen, dass sie zwischen diesen zwei Bewegungsmarkern liegen, kleiner als oder gleich 4 ist,
b) das Modifizieren von Bewegungsmarkern, die eine Bewegung anzeigen, zu Bewegungsmarkern, die einen kurzen Stopp anzeigen, wenn die mit ihnen verknüpften Zeitmarker anzeigen, dass ihnen Bewegungsmarker vorangehen und nachfolgen, welche einen kurzen Stopp anzeigen, und die mit letzteren verknüpften Zeitmarker eine Dauer anzeigen, die kürzer als eine erste Schwelle ist,
c) das Modifizieren von Bewegungsmarkern, die eine Bewegung anzeigen, zu Bewegungsmarkern, die einen kurzen Stopp anzeigen, wenn die mit ihnen verknüpften Zeitmarker anzeigen, dass ihnen Bewegungsmarker vorangehen und nachfolgen, die einen kurzen Stopp anzeigen und die mit derselben Lokalisierungszelle verknüpft sind, und die mit letzteren verknüpften Zeitmarker eine Dauer anzeigen, die kürzer als eine zweite Schwelle ist,
d) das Modifizieren von Bewegungsmarkern, die einen kurzen Stopp anzeigen, zu Bewegungsmarkern, die eine Bewegung anzeigen, wenn die mit ihnen verknüpften Zeitmarker anzeigen, dass ihnen Bewegungsmarker vorangehen und nachfolgen, die eine Bewegung anzeigen, und die mit letzteren verknüpften Zeitmarker eine Dauer anzeigen, die kürzer als eine dritte Schwelle ist, wobei der Analysierer (8) weiter so eingerichtet ist, dass er nach dem Anwenden mindestens einer der Regeln a), b), c) und d) die folgende Regel anwendet:
e) das Verschmelzen von Bewegungsmarkern, die einen kurzen Stopp anzeigen und deren Zeitmarker anzeigen, dass sie aufeinanderfolgen, und das Verknüpfen der Lokalisierungszelle, die mit den Bewegungsmarkern verknüpft ist, deren Zeitmarker die längste Dauer darstellen, und eines Zeitmarkers, der der Summe der Dauern der verknüpften Zeitmarker entspricht, mit dem resultierenden Bewegungsmarker.

2. Vorrichtung nach Anspruch 1, wobei der Analysierer weiter so eingerichtet ist, dass er den Klassifizierer (6) und den Analysierer (8) nacheinander aufruft, um Trajektoriendaten zu erzeugen.

3. Vorrichtung nach einem der vorstehenden Ansprüche, wobei der Analysierer (8) weiter so eingerichtet ist, dass er die Regel a) anwendet, bevor er die Regel b) anwendet.

4. Vorrichtung nach einem der vorstehenden Ansprüche, wobei der Analysierer (8) weiter so eingerichtet ist, dass er die Regel b) anwendet, bevor er die Regel c) anwendet.

5. Vorrichtung nach einem der vorstehenden Ansprüche, wobei der Analysierer (8) weiter so eingerichtet ist, dass er die Regel c) anwendet, bevor er die Regel d) anwendet.

6. Verfahren zur Trajektorienbestimmung, das die folgenden Operationen umfasst:
a) Empfangen von Signalisierungsdaten, die Kennungen von mobilen Kommunikationsvorrichtungen, Zeitmarker und Signalisierungskennungen miteinander verknüpfen, wobei mindestens einige der Signalisierungskennungen eine Lokalisierungszelle bezeichnen,
b) bei einer gegebenen Kennung einer mobilen Kommunikationsvorrichtung, Markieren der mit dieser verknüpften Signalisierungsdaten mit einem Bewegungsmarker, der einen Zustand anzeigt, ausgewählt aus einer Liste, die mindestens eine Bewegung und einen kurzen Stopp umfasst,
c) Verarbeiten der markierten Signalisierungsdaten in Abhängigkeit von den Bewegungsmarkern, um Trajektoriendaten zu erzeugen, die einerseits eine gegebene Kennung einer mobilen Kommunikationsvorrichtung, und andererseits eine Folge von Bewegungsmarkern, die jeweils mit einer Lokalisierungszelle und mit einem Zeitmarker verknüpft sind, miteinander verknüpfen, sodass zwei Bewegungsmarker, deren Zeitmarker anzeigen, dass sie einander folgen, zwei Bewegungen anzeigen, oder höchstens einen einzigen kurzen Stopp anzeigen, indem mindestens eine der folgenden Regeln angewendet wird:
c1) das Modifizieren von beliebigen Bewegungsmarkern zu Bewegungsmarkern, die einen kurzen Stopp anzeigen, wenn bei zwei Bewegungsmarkern, die einen kurzen Stopp anzeigen, der mit einer einzigen Lokalisierungszelle verknüpft ist, die Anzahl von Bewegungsmarkern, deren Zeitmarker anzeigen, dass sie zwischen diesen zwei Bewegungsmarkern liegen, kleiner als oder gleich 4 ist,
c2) das Modifizieren von Bewegungsmarkern, die eine Bewegung anzeigen, zu Bewegungsmarkern, die einen kurzen Stopp anzeigen, wenn die mit ihnen verknüpften Zeitmarker anzeigen, dass ihnen Bewegungsmarker vorangehen und nachfolgen, welche einen kurzen Stopp anzeigen, und die mit letzteren verknüpften Zeitmarker eine Dauer anzeigen, die kürzer als eine erste Schwelle ist,
c3) das Modifizieren von Bewegungsmarkern, die eine Bewegung anzeigen, zu Bewegungsmarkern, die einen kurzen Stopp anzeigen, wenn die mit ihnen verknüpften Zeitmarker anzeigen, dass ihnen Bewegungsmarker vorangehen und nachfolgen, die einen kurzen Stopp anzeigen und die mit derselben Lokalisierungszelle verknüpft sind, und die mit letzteren verknüpften Zeitmarker eine Dauer anzeigen, die kürzer als eine zweite Schwelle ist,
c4) das Modifizieren von Bewegungsmarkern, die einen kurzen Stopp anzeigen, zu Bewegungsmarkern, die eine Bewegung anzeigen, wenn die mit ihnen verknüpften Zeitmarker anzeigen, dass ihnen Bewegungsmarker vorangehen und nachfolgen, die eine Bewegung anzeigen, und die mit letzteren verknüpften Zeitmarker eine Dauer anzeigen, die kürzer als eine dritte Schwelle ist, und
indem nach dem Anwenden mindestens einer der Regeln c1) bis c4) die folgende Regel angewendet wird:
c5) das Verschmelzen von Bewegungsmarkern, die einen kurzen Stopp anzeigen und deren Zeitmarker anzeigen, dass sie aufeinanderfolgen, und das Verknüpfen der Lokalisierungszelle, die mit den Bewegungsmarkern verknüpft ist, deren Zeitmarker die längste Dauer darstellen, und eines Zeitmarkers, der der Summe der Dauern der verknüpften Zeitmarker entspricht, mit dem resultierenden Bewegungsmarker.

7. Verfahren nach Anspruch 6, wobei die Operation c) die Regel c1) vor der Regel c2) anwendet.

8. Verfahren nach Anspruch 6 oder 7, wobei die Operation c) die Regel c2) anwendet, bevor sie die Regel c3) anwendet.

9. Verfahren nach einem der Ansprüche 6 bis 8, wobei die Operation c) die Regel c3) anwendet, bevor sie die Regel c4) anwendet.

10. Computerprogrammprodukt, das Programmcodeabschnitte umfasst, um das Verfahren nach einem der Ansprüche 6 bis 9 umzusetzen, wenn das Programm auf einem Computer ausgeführt wird.

## Claims

1. A path determination device, comprising:
- a memory (4) for receiving signaling data associating mobile communication device identifiers, time markers and signaling identifiers, at least some of the signaling identifiers denoting a location cell,
- a classifier (6) capable, for a given mobile communication device identifier, of marking the signaling data that are associated therewith with a movement marker indicating a state chosen from among a list comprising at least a movement and a short stop,
- an analyzer (8) capable of processing the marked signaling data on the basis of the movement markers so as to produce path data associating a given mobile communication device identifier, on the one hand, and a series of movement markers each associated with a location cell and with a time marker, on the other hand, such that two movement markers whose time markers indicate that they are sequential denote different states, by applying at least one of the following rules:
a) changing arbitrary movement markers into movement markers indicating a short stop when, for two movement markers indicating a short stop associated with a single location cell, the number of movement markers whose time markers indicate that they are between these two movement markers is less than or equal to 4,
b) changing movement markers indicating a movement into movement markers indicating a short stop when the time markers that are associated therewith indicate that they are preceded and followed by movement markers indicating a short stop and the time markers associated with the latter indicate a duration shorter than a first threshold,
c) changing movement markers indicating a movement into movement markers indicating a short stop when the time markers that are associated therewith indicate that they are preceded and followed by movement markers indicating a short stop that are associated with one and the same location cell and the time markers associated with the latter indicate a duration shorter than a second threshold,
d) changing movement markers indicating a short stop into movement markers indicating a movement when the time markers that are associated therewith indicate that they are preceded and followed by movement markers indicating a movement and the time markers associated with the latter indicate a duration shorter than a third threshold,
e) merging movement markers indicating a short stop whose time markers indicate that they are consecutive, and associating, with the resulting movement marker, the location cell associated with the movement markers whose time markers represent the longest duration and a time marker corresponding to the sum of the durations of the associated time markers.

2. The device as claimed in claim 1, wherein the analyzer is further arranged to call the classifier (6) and the analyzer (8) sequentially to produce path data.

3. The device as claimed in one of the preceding claims, wherein the analyzer (8) is further arranged to apply rule a) before applying rule b).

4. The device as claimed in one of the preceding claims, wherein the analyzer (8) is further arranged to apply rule b) before applying rule c).

5. The device as claimed in one of the preceding claims, wherein the analyzer (8) is further arranged to apply rule c) before applying rule d).

6. A path determination method, comprising the following operations:
a) receiving signaling data associating mobile communication device identifiers, time markers and signaling identifiers, at least some of the signaling identifiers denoting a location cell,
b) for a given mobile communication device identifier, marking the signaling data that are associated therewith with a movement marker indicating a state chosen from among a list comprising at least a movement and a short stop,
c) processing the marked signaling data on the basis of the movement markers so as to produce path data associating a given mobile communication device identifier, on the one hand, and a series of movement markers each associated with a location cell and with a time marker, on the other hand, such that two movement markers whose time markers indicate that they are sequential denote different states, by applying at least one of the following rules:
c1) changing arbitrary movement markers into movement markers indicating a short stop when, for two movement markers indicating a short stop associated with a single location cell, the number of movement markers whose time markers indicate that they are between these two movement markers is less than or equal to 4,
c2) changing movement markers indicating a movement into movement markers indicating a short stop when the time markers that are associated therewith indicate that they are preceded and followed by movement markers indicating a short stop and the time markers associated with the latter indicate a duration shorter than a first threshold,
c3) changing movement markers indicating a movement into movement markers indicating a short stop when the time markers that are associated therewith indicate that they are preceded and followed by movement markers indicating a short stop that are associated with one and
the same location cell and the time markers associated with the latter indicate a duration shorter than a second threshold,
c4) changing movement markers indicating a short stop into movement markers indicating a movement when the time markers that are associated therewith indicate that they are preceded and followed by movement markers indicating a movement and the time markers associated with the latter indicate a duration shorter than a third threshold, and,
after applying at least one of rules c1) to c4), by applying the following rule:
c5) merging movement markers indicating a short stop whose time markers indicate that they are consecutive, and associating, with the resulting movement marker, the location cell associated with the movement markers whose time markers represent the longest duration and a time marker corresponding to the sum of the durations of the associated time markers.

7. The method as claimed in claim 6, wherein operation c) applies rule c1) before rule c2).

8. The method as claimed in claim 6 or 7, wherein operation c) applies rule c2) before applying rule c3).

9. The method as claimed in one of claims 6 to 8, wherein operation c) applies rule c3) before applying rule c4).

10. A computer program product comprising portions of program code for implementing the method as claimed in one of claims 6 to 9 when said program is executed on a computer.
